# EUROPÄISCHE PATENTSCHRIFT

(11) **EP 2 934 991 B1**
(45) Veröffentlichungstag und Bekanntmachung des Hinweises auf die Patenterteilung: **30.11.2016**
(21) Anmeldenummer: 13805831.8
(22) Anmeldetag: 09.12.2013
(51) Int. Cl.: B62D 27/02, B62D 27/06, B62D 29/04, F16B 5/06, F16B 11/00, F16B 37/00

(54) **BEFESTIGUNGSVORRICHTUNG FÜR EIN AUS EINEM KOHLENSTOFFFASERVERSTÄRKTEN KUNSTSTOFF BESTEHENDES BAUTEIL AN EINER KOMPONENTE, INSBES. EINER FAHRWERKSKOMPONENTE EINES FAHRZEUGS**
FASTENING DEVICE FOR FASTENING A STRUCTURAL PART CONSISTING OF A CARBON-FIBRE-REINFORCED PLASTIC TO A COMPONENT, IN PARTICULAR A CHASSIS COMPONENT OF A VEHICLE
DISPOSITIF DE FIXATION D'UNE PIÈCE CONSTITUÉE D'UNE MATIÈRE PLASTIQUE RENFORCÉE PAR DES FIBRES DE CARBONE SUR UN COMPOSANT, EN PARTICULIER D'UN COMPOSANT DE CHÂSSIS D'UN VÉHICULE

(30) Priorität: 19.12.2012 DE 102012223863
(43) Veröffentlichungstag der Anmeldung: 28.10.2015
(73) Patentinhaber: Bayerische Motoren Werke Aktiengesellschaft, 80809 München (DE)
(72) Erfinder: RÖHRL, Sabine, 82110 Germering (DE); DIRSCHMID, Ferdinand, 85521 Ottobrunn (DE); WEISS, Thomas, 82340 Feldafing (DE); GRUBER, Anton, 82178 Puchheim (DE); KETTENBERGER, Johann, 84543 Winhoering (DE)
(86) Internationale Anmeldenummer: PCT/EP2013/075968
(87) Internationale Veröffentlichungsnummer: WO 2014/095461

(56) Entgegenhaltungen:
- DE-A1-102009 050 990
- DE-A1-102011 107 237
- US-A1- 2009 278 371

## Beschreibung

Die vorliegende Erfindung betrifft eine Befestigungsvorrichtung für ein aus einem kohlenstofffaserverstärkten Kunststoff bestehendes Bauteil an einer Komponente, insbes. einer Fahrwerkskomponente eines Fahrzeuges, insbesondere eines Kraftfahrzeugs.

Die gattungsgemäße DE 10 2009 050 990 A1 offenbart eine solche Vorrichtung.

Im Fahrzeugbau werden zunehmend Bauteile aus kohlenstofffaserverstärktem Kunststoff verwendet, wenn hohe gewichtsspezifische Festigkeiten und Steifigkeiten gefordert sind. Teilweise werden sogar ganze Fahrzeugkomponenten, wie beispielsweise die Zelle eines Fahrzeugs, ganz oder teilweise aus kohlenstofffaserverstärktem Kunststoff gefertigt. Die Verbindung dieser Bauteile bzw. Komponenten aus kohlenstofffaserverstärktem Kunststoff mit anderen Komponenten, insbes. einer Fahrwerkskomponente eines Fahrzeuges, bereitet jedoch Probleme, da kohlenstofffaserverstärkte Kunststoffe unter Druck ein Setzungsverhalten zeigen, welches eine sichere Anbindung an andere Komponenten negativ beeinflusst.

Es ist daher Aufgabe der vorliegenden Erfindung, eine Befestigungsvorrichtung bereit zu stellen, die eine sichere und hochfeste Befestigung von Bauteilen aus einem kohlenstofffaserverstärkten Kunststoff an anderen Fahrzeugkomponenten gewährleistet Bei dem Bauteil kann es sich insbesondere ebenfalls um eine Fahrzeugkomponente handeln, so dass der Erfindung insbesondere die Aufgabe zugrunde liegt, eine Betestigungsvorrichtung bereit zu stellen, die eine sichere und hochfeste Verbindung von zwei Fahrzeugkomponenten gewährleistet, wobei zumindest eine Fahrzeugkomponente aus einem kohlenstofffaserverstärkten Kunststoff gefertigt ist.

Diese Aufgabe wird bei einer Befestigungsvorrichtung für ein aus einem kohlenstofffaserverstärkten Kunststoff bestehendes Bauteil, insbes. einer Fahrzeugzelle oder einem tragenden Karosseriebauteil, an einer Komponente, insbes. einer Fahrwerkskomponente, eines Fahrzeuges bzw. Kraftfahrzeugs erfindungsgemäß dadurch gelöst, dass an dem Bauteil ein erstes Verbindungselement angebracht ist, an weichem ein zweites Verbindungselement anbringbar ist, dass das erste Verbindungselement mittels einer Klebeschicht mit dem Bauteil verbunden ist und eine abstehende Buchse aufweist, die eine Bohrung des Bauteils durchgreift und die mit einem freien Ende über das Bauteil übersteht.

Alternativ wird die Aufgabe bei einer Befestigungsvorrichtung für ein aus einem kohlenstofffaserverstärkten Kunststoff bestehendes Bauteil, insbes. einer Zelle eines Fahrzeugs oder einem tragenden Karosseriebauteil, an einer Komponente, insbes. einer Fahrwerkskomponente des Fahrzeuges bzw. Kraftfahrzeugs erfindungsgemäß dadurch gelöst, dass an dem Bauteil ein erstes Verbindungselement angebracht ist, an welchem ein zweites Verbindungselement anbringbar ist, und dass das erste Verbindungselement mittels einer Klebeschicht mit dem Bauteil verbunden ist. Weiterhin liegt ein drittes Verbindungselement an der Komponente an und das Bauteil ist zwischen dem ersten Verbindungselement und dem dritten Verbindungselement gelagert. Das dritte Verbindungselement weist eine abstehende Hülse auf, die eine Bohrung des Bauteils durchgreift und die mit ihrem freien Ende über das Bauteil übersteht.

Infolge dieser erfindungsgemäßen Ausgestaltung wird eine Befestigungsvorrichtung bereit gestellt, bei der keine Klemmung des Bauteils aus kohlenstofffaserverstärktem Kunststoff erfolgt, da das Bauteil lediglich durch die Klebeschicht an dem ersten Verbindungselement gehalten wird. Somit kann keine Setzungsverhalten auftreten. Darüber hinaus können hochfeste und lösbare Schraubverbindungen realisiert werden, die kostengünstig und in hohen Stückzahlen hergestellt werden können.

Die Unteransprüche beinhalten vorteilhafte Weiterbildungen und Ausgestaltungen der Erfindung.

Gemäß einer bevorzugten Weiterbildung beinhaltet das erste Verbindungselement ein Innengewinde und das zweite Verbindungselement einen Gewindestift.

Gemäß einer ersten Ausführungsform liegt die Buchse an der Komponente an und das Bauteil ist zwischen der Komponente und dem ersten Verbindungselement gelagert. Diese Ausführungsform gewährleistet bei einem relativ leichten Aufbau die Übertragung hoher Zugkräfte.

Gemäß einer bevorzugten Weiterbildung kann nicht nur das erste Verbindungselement mittels einer Klebeschicht mit dem Bauteil verbunden sein, sondern das Bauteil kann vorteilhafterweise auch mittels eines Klebers mit der Komponente verklebt sein. Hierdurch ergibt sich eine besonders feste und sichere Anbindung des Bauteils an die Komponente, die auch hohe Querund/oder Druckkräfte übertragen kann.

Dabei kann bevorzugt das dritte Verbindungselement an dem freien Ende der Buchse anliegen. Alternativ kann bevorzugt das dritte Verbindungselement eine Hülse umfassen, die die Öffnung des Bauteils durchgreift und die an dem ersten Verbindungselement anliegt.

Weiterhin kann gemaß einer vorteilhaften Weiterbildung das Bauteil mittels eines Klebers auch mit dem dritten Verbindungselement verklebt sein.

Vorteilhafterweise weist das dritte Verbindungselement die gleiche Formgebung auf wie das erste Verbindungselement, wobei das dritte Verbindungs-element nicht mechanisch an das zweite Verbindungselement ankoppelbar ist, insbesondere daher kein Innengewinde umfasst.

Bei dieser Ausführungsform können sowohl hohe Querkräfte (über große Klebeflächen) als auch hohe Zug- und Druckkräfte übertragen werden. Außerdem kann in dieser Ausführungsform die Verbindung zwischen Bauteil und Komponente einfach wieder gelöst werden.

Weitere Einzelheiten, Merkmale und Vorteile der Erfindung ergeben sich aus der nachfolgenden Beschreibung anhand der Zeichnungen. Es zeigen:
- Figur 1: eine erste Ausführungsform einer erfindungsgemäßen Befestigungsvorrichtung,
- Figur 2: eine zweite Ausführungsform der erfindungsgemäßen Befestigungsvorrichtung, und
- Figur 3: eine dritte Ausführungsform der erfindungsgemäßen Befestigungsvorrichtung.

In den Figuren sind lediglich die hier interessierenden Teile der Befestigungsvorrichtung dargestellt. Sämtliche übrigen Teile sind der Übersichtlichkeit halber weggelassen.

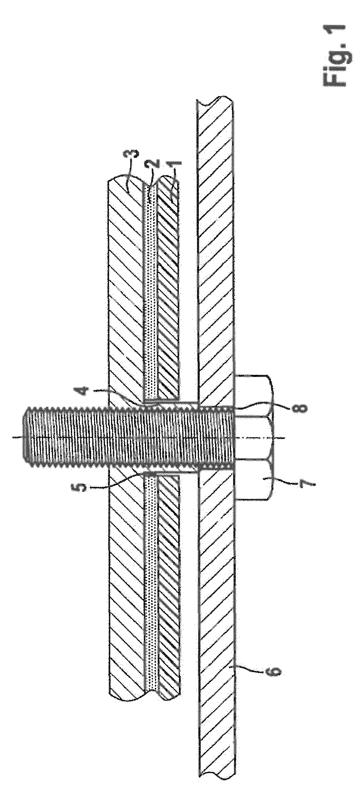

Figur 1 zeigt eine erste Ausführungsform der erfindungsgemäßen Befestigungsvorrichtung, die leicht aufgebaut ist und hohe Zugkräfte übertragen kann.

Ein aus einem kohlenstofffaserverstärkten Kunststoff bestehendes Bauteil 1 (CFK-Bauteil), beispielsweise eine CFK-Zelle oder einem tragendem Karosseriebauteil eines Fahrzeugs, ist über eine Klebeschicht 2 mit einem ersten Verbindungselement 3 verklebt. Das erste Verbindungselement 3 ist mit einer abstehenden Buchse 4 versehen, die einstückig mit dem ersten Verbindungselement 3 ausgebildet sein kann. Verbindungselement 3 und Buchse 4 bilden im Querschnitt gesehen die Form eines "T", wobei das Verbindungselement 3 den horizontalen und die Buchse 4 den vertikalen Schenkel des "T" bilden. Die Buchse 4 des ersten Verbindungselementes 3 durchsetzt eine Bohrung 5 in dem Bauteil 1 und steht mit seinem freien Ende auf der dem ersten Verbindungselement 3 abgewandten Seite über das Bauteil 1 über.

Um das Bauteil 3 mit einer Komponente 6, bei der es sich beispielsweise um eine Fahrwerkskomponente des Fahrzeuges handeln kann, zu verbinden, ist ein zweites Verbindungselement 7 vorgesehen. Dieses zweite Verbindungselement 7 durchsetzt eine Bohrung 8 in der Komponente 6 und kann mit dem ersten Verbindungselement 3 verbunden werden. In diesem Zustand stützt sich die Komponente 6 an der Buchse 4 ab. Da die Buchse 4 über das Bauteil 1 übersteht, können keine Klemmkräfte auf das Bauteil 1 übertragen werden, das ausschließlich über die Klebeschicht 2 mit der erfindungsgemäßen Befestigungsvorrichtung verbunden ist.

Bei dem ersten Verbindungselement 3 kann es sich beispielsweise um eine mit einem Innengewinde versehene Mutter und bei dem zweiten Verbindungselement 7 um einen in die Mutter einschraubbaren Gewindestift, insbesondere um eine Schraube, handeln.

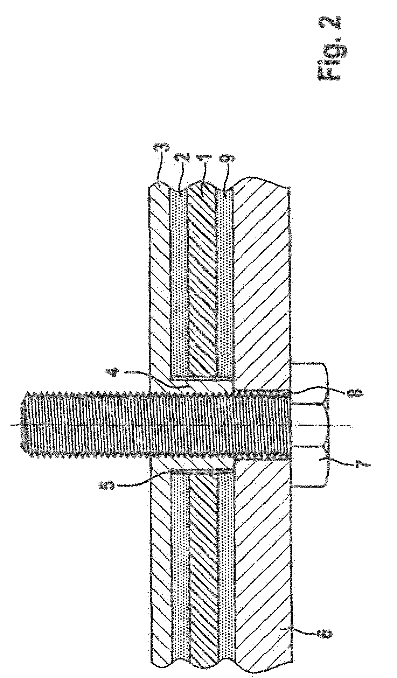

Figur 2 zeigt eine zweite Ausführungsform der erfindungsgemäßen Befestigungsvorrichtung, die sowohl hohe Querkräfte als auch hohe Zug- und Druckkräfte übertragen kann.

Diese Ausführungsform unterscheidet sich von der ersten Ausführungsform dadurch, dass das Bauteil 1 zusätzlich mit der Komponente 6 über einen Kleber 9 verbunden ist, wodurch wegen der relativ großen Klebeflächen 2 und 9 hohe Querkräfte übertragen werden können. Das Bauteil 1 ist somit auf der einen Seite mit dem ersten Verbindungselement 3 und auf der anderen Seite mit der Komponente 6 verklebt.

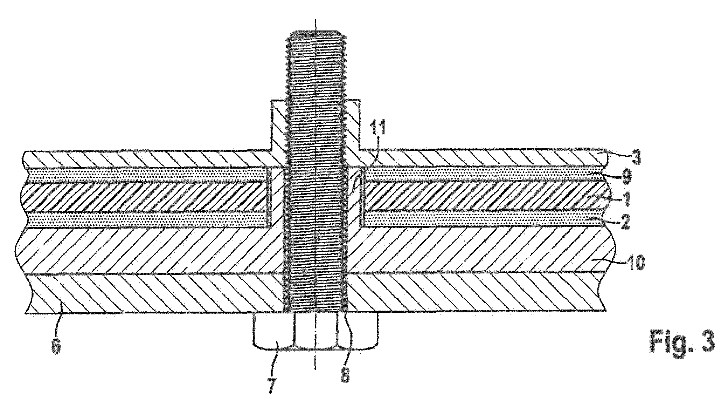

Figur 3 zeigt eine dritte Ausführungsform der erfindungsgemäßen Befestigungsvorrichtung, die sowohl hohe Querkräfte als auch hohe Zug- und Druckkräfte übertragen kann.

Das aus einem kohlenstofffaserverstärkten Kunststoff bestehende Bauteil 1 (CFK-Bauteil) ist auch bei dieser Ausführungsform über die Klebeschicht 2 mit dem ersten Verbindungselement 3 verklebt. Das erste Verbindungselement 3 hat die gleiche Formgebung wie nach dem in Figur 1 dargestellten ersten Ausführungsbeispiel.

Die Buchse 4 durchsetzt ebenfalls die Bohrung 5 in dem Bauteil 1 und steht mit seinem freien Ende auf der dem ersten Verbindungselement 3 abgewandten Seite über das Bauteil 1 über.

Zur Verbindung des Bauteils 3 mit der Komponente 6 dient auch bei diesem Ausführungsbeispiel das zweite Verbindungselement 7. Dieses zweite Verbindungselement 7 durchsetzt die Bohrung 8 in der Komponente 6 und kann mit dem ersten Verbindungselement 3 verbunden werden. Im Gegensatz zum ersten Ausführungsbeispiel, bei dem sich die Komponente 6 an der Buchse 4 abstützt, stützt sich bei diesem Ausführungsbeispiel die Komponente 6 an einem dritten Verbindungselement 10 ab. In Folge dieser Anordnung befindet sich eine Hülse 11 auf der der Komponente 6 abgewandten Seite des dritten Verbindungselementes 10 und steht dort über das Bauteil 1 über. An dieser überstehenden Hülse 11 liegt das erste Verbindungselement 3 an. Die Hülse 11 kann insbesondere einstückig mit dem dritten Verbindungselement 10 ausgebildet sein.

Das dritte Verbindungselement 10 weist im Querschnitt die gleiche Formgebung wie das erste Verbindungselement 3 auf und ist ebenfalls mittels eines Klebers 9 mit dem Bauteil 1 verbunden. Das Bauteil 1 ist folglich auf der einen Seite mit dem ersten Verbindungselement 3 und auf der anderen Seite mit dem dritten Verbindungselement 10 verklebt. Im Gegensatz zu dem ersten Verbindungselement 3 handelt es sich bei dem dritten Verbindungselement 10 lediglich um eine Abstandselement und nicht um ein Befestigungselement. Somit weist das dritte Verbindungselement 10 insbesondere kein Innengewinde auf.

Statt wie beschrieben und in den Figuren dargestellt, kann die Buchse 4 statt an dem ersten Verbindungselement 3 auch an der Komponente 6 angeordnet oder als separates Bauteil ausgebildet sein. Ebenso kann die Hülse 11 statt an dem dritten Verbindungselement 10 auch als separates Bauteil vorgesehen sein.

Die erfindungsgemäße Befestigungsvorrichtung ermöglicht eine hochfeste Verbindung insbes. eines CFK-Bauteils mit einer Komponente und ist kostengünstig und platzsparend realisierbar.

Die vorhergehende Beschreibung der vorliegenden Erfindung dient nur zu illustrativen Zwecken und nicht zum Zwecke der Beschränkung der Erfindung.

### Bezugszeichenliste

- 1: Bauteil
- 2: Klebeschicht
- 3: erstes Verbindungselement
- 4: Buchse
- 5: Bohrung
- 6: Komponente
- 7: zweites Verbindungselement
- 8: Bohrung
- 9: Kleber
- 10: drittes Verbindungselement
- 11: Hülse

## Patentansprüche

1. Befestigungsvorrichtung für ein aus einem kohlenstofffaserverstärkten Kunststoff bestehendes Bauteil, insbes. einer Zelle eines Fahrzeugs oder einem tragenden Karosseriebauteil, an einer Komponente, insbes. einer Fahrwerkskomponente des Fahrzeuges, **dadurch gekennzeichnet, dass** an dem Bauteil (1) ein erstes Verbindungselement (3) angebracht ist, an welchem ein zweites Verbindungselement (7) anbringbar ist, dass das erste Verbindungselement (3) mittels einer Klebeschicht (2) mit dem Bauteil (1) verbunden ist und eine abstehende Buchse (4) aufweist, die eine Bohrung (5) des Bauteils (1) durchgreift und die mit ihrem freien Ende über das Bauteil (1) übersteht.

2. Befestigungsvorrichtung für ein aus einem kohlenstofffaserverstärkten Kunststoff bestehendes Bauteil, insbes. einer Zelle eines Fahrzeugs oder einem tragenden Karosseriebauteil, an einer Komponente, insbes. einer Fahrwerkskomponente des Fahrzeuges, **dadurch gekennzeichnet, dass** an dem Bauteil (1) ein erstes Verbindungselement (3) angebracht ist, an welchem ein zweites Verbindungselement (7) anbringbar ist, dass das erste Verbindungselement (3) mittels einer Klebeschicht (2) mit dem Bauteil (1) verbunden ist, und dass ein drittes Verbindungselement (10) an der Komponente (6) anliegt, das eine abstehende Hülse (11) aufweist, die eine Bohrung (5) des Bauteils (1) durchgreift und die mit ihrem freien Ende über das Bauteil (1) übersteht, wobei das Bauteil (1) zwischen dem ersten Verbindungselement (3) und dem dritten Verbindungselement (10) gelagert ist.

3. Befestigungsvorrichtung nach Anspruch 1 oder 2, **dadurch gekennzeichnet, dass** das erste Verbindungselement (3) ein Innengewinde und das zweite Verbindungselement (7) einen Gewindestift umfasst.

4. Befestigungsvorrichtung nach einem der vorhergehenden Ansprüche, **dadurch gekennzeichnet, dass** die Buchse (4) an der Komponente (6) anliegt und das Bauteil (1) zwischen der Komponente (6) und dem ersten Verbindungselement (3) gelagert ist.

5. Befestigungsvorrichtung nach einem der vorhergehenden Ansprüche, **dadurch gekennzeichnet, dass** das Bauteil (1) mittels eines Klebers (9) mit der Komponente (6) verklebt ist.

6. Befestigungsvorrichtung nach Anspruch 2, **dadurch gekennzeichnet, dass** das erste Verbindungselement (3) an dem freien Ende der Hülse (11) anliegt.

7. Befestigungsvorrichtung nach einem der Ansprüche 2 oder 6, **dadurch gekennzeichnet, dass** das Bauteil (1) mittels eines Klebers (9) mit dem dritten Verbindungselement (10) verklebt ist.

8. Befestigungsvorrichtung nach einem der Ansprüche 2 oder 6 oder 7, **dadurch gekennzeichnet, dass** das dritte Verbindungselement (10) die gleiche Formgebung aufweist wie das erste Verbindungselement (3).

## Claims

1. A fastening device for a structural part, comprising a carbon fibre-reinforced plastics material, especially of a cell of a vehicle or a supporting bodywork structural part, to a component, especially to a chassis component of the vehicle, **characterised in that** attached to the structural part (1) is a first connecting element (3) to which a second connecting element (7) can be attached, **in that** the first connecting element (3) is joined to the structural part (1) by means of an adhesive layer (2) and has a protruding bushing (4) which engages through a hole (5) in the structural part (1) and which projects above the structural part (1) by its free end.

2. A fastening device for a structural part comprising a carbon fibre-reinforced plastics material, especially of a cell of a vehicle or a supporting bodywork structural part, to a component, especially to a chassis component of the vehicle, **characterised in that** attached to the structural part (1) is a first connecting element (3) to which a second connecting element (7) can be attached, **in that** the first connecting element (3) is joined to the structural part (1) by means of an adhesive layer (2), and **in that** a third connecting element (10) rests against the component (6) and has a protruding sleeve (11) which engages through a hole (5) in the structural part (1) and which projects above the structural part (1) by its free end, the structural part (1) being mounted between the first connecting element (3) and the third connecting element (10).

3. A fastening device according to claim 1 or claim 2, **characterised in that** the first connecting element (3) comprises an internal thread and the second connecting element (7) comprises a threaded pin.

4. A fastening device according to any one of the preceding claims, **characterised in that** the bushing (4) rests against the component (6) and the structural part (1) is mounted between the component (6) and the first connecting element (3).

5. A fastening device according to any one of the preceding claims, **characterised in that** the structural part (1) is affixed to the component (6) by an adhesive (9).

6. A fastening device according to claim 2, **characterised in that** the first connecting element (3) rests against the free end of the sleeve (11).

7. A fastening device according to either claim 2 or claim 6, **characterised in that** the structural part (1) is affixed to the third connecting element (10) by an adhesive (9).

8. A fastening device according to any one of claims 2 or 6 or 7, **characterised in that** the third connecting element (10) has the same shaping as the first connecting element (3).

## Revendications

1. Dispositif de fixation d'une pièce réalisée en un matériau synthétique renforcé par des fibres de carbone, en particulier d'une cellule d'un véhicule ou d'un composant de carrosserie porteur sur un composant, en particulier un composant du mécanisme de roulement du véhicule,
**caractérisé en ce que**
sur la pièce (1) est appliqué un premier élément de liaison (3) sur lequel peut être appliqué un second élément de liaison (7), le premier élément de liaison (3) est relié à la pièce (1) au moyen d'une couche d'adhésif (2), et comporte une douille écartée (4) qui traverse un perçage (5) de la pièce (1) et dépasse de cette pièce (1) par son extrémité libre.

2. Dispositif de fixation d'une pièce réalisée en un matériau synthétique renforcé par des fibres de carbone, en particulier d'une cellule d'un véhicule ou d'un composant de carrosserie porteur, sur un composant, en particulier un composant du mécanisme de roulement du véhicule,
**caractérisé en ce que**
sur la pièce (1) est appliqué un premier élément de liaison (3) sur lequel peut être appliqué un second élément de liaison (7), le premier élément de liaison (3) est relié à la pièce (1) au moyen d'une couche d'adhésif (2), et sur le composant (6) s'applique un troisième élément de liaison (10) comportant une douille écartée (11) qui traverse un perçage (5) de la pièce (1) et dépasse de la pièce (1) par son extrémité libre, la pièce (1) étant montée entre le premier élément de liaison (3) et le troisième élément de liaison (10).

3. Dispositif de fixation conforme à la revendication 1 ou 2,
**caractérisé en ce que**
le premier élément de liaison (3) comporte un filetage interne et le second élément de liaison (7) comporte une tige filetée.

4. Dispositif de fixation conforme à l'une des revendications précédentes,
**caractérisé en ce que**
la douille (4) s'applique sur le composant (6) et la pièce (1) est montée entre le composant (6) et le premier élément de liaison (3).

5. Dispositif de liaison conforme à l'une des revendications précédentes,
**caractérisé en ce que**
la pièce (1) est collée au composant (6) au moyen d'un adhésif (9).

6. Dispositif de fixation conforme à la revendication 2,
**caractérisé en ce que**
le premier élément de liaison (3) s'applique sur l'extrémité libre de la douille (11).

7. Dispositif de fixation conforme à l'une des revendications 2 et 6,
**caractérisé en ce que**
la pièce (1) est collée au troisième élément de liaison (10) au moyen d'un adhésif (9).

8. Dispositif de fixation conforme à l'une des revendications 2 ou 6 ou 7,
**caractérisé en ce que**
le troisième élément de liaison (10) a la même conformation que le premier élément de liaison (3).
